# EUROPÄISCHE PATENTSCHRIFT

(11) **EP 0 201 977 B1**
(45) Veröffentlichungstag und Bekanntmachung des Hinweises auf die Patenterteilung: **03.03.1993**
(21) Anmeldenummer: 86200803.4
(22) Anmeldetag: 07.05.1986
(51) Int. Cl.: H04B 7/08

(54) **Antennendiversity-Empfangsanlage zur Elimination von Empfangsstörungen**
Antenna diversity reception arrangement for eliminating reception disturbances
Dispositif de réception à diversité d'antenne destiné à éliminer des perturbations de réception

(30) Priorität: 13.05.1985 DE 3517247
(43) Veröffentlichungstag der Anmeldung: 20.11.1986
(73) Patentinhaber: Philips Electronics N.V., 5621 BA Eindhoven (NL); FUBA Hans Kolbe & Co, 31134 Hildesheim (DE)
(72) Erfinder: Lindenmeier, Heinz, NL-5656 AA Eindhoven (NL); Manner, Ernst, NL-5656 AA Eindhoven (NL); Flachenecker, Gerhard, NL-5656 AA Eindhoven (NL)
(74) Vertreter: De Jongh, Cornelis Dominicus

(56) Entgegenhaltungen:
- EP-A- 0 036 139
- EP-A- 0 132 752
- EP-A- 0 141 218
- L'ONDE ELECTRIQUE, Band XL, Nr. 394, Januar 1960, Seiten 112-115, Paris, FR; P. LEMOINE: "Un combineur de diversité pour liaisons transhorizon"

## Beschreibung

Die Erfindung betrifft eine Antennendiversity-Anlage für den mobilen Empfang frequenzmodulierter Schwingungen mit einem Empfänger (2), mindestens zwei Antennen 1-i (i = 1, 2, ..., n) und einem Diversityprozessor (3) welchem ein Signal zurückgeführt wird welches einer bestimmten der Antennensignalen abgeleiteten lineare Kombination entspricht und welcher Diversity Processor Mittel enthalt zum Überprüfen des zurückgeführten Signals und um gegebenenfalls eine andere aus den Antennensignalen abgeleitete lineare Kombination dem Empfänger zuzuführen.

Ein solches Antennendiversity-Anlage ist bekannt aus EP-A-0036139. Diese Publikation offenbart eine Antennendiversity-Anlage für den mobilen Empfang mit einem Empfänger, zwei Antennen und einem Diversityprozessor. Die Signale beider Antennen werden im Diversityprozessor durch eine Additions- bzw. Subtraktionsschaltung linear kombiniert und dem Empfänger zugeführt. Dem Diversityprozessor wird ein Signal zurückgeführt, das der empfangen Signalleistung - d.h. der Leistung der linear kombinierten Antennensignalen - entspricht. Der Diversityprozessor entscheidet anhand eines Vergleiches dieses Signals mit einer Schwelle ob eine andere lineare Kombination der Antennensignale gewählt wird; in diesem fall wird zwischen einer Addition und einer Subtraktion umgeschaltet. Die Antennendiversity-Anlage gemäß EP-A 0031639 wird in einem mobilen Handfunkgerät eingesetzt. Das heißt, daß die Zeitkonstante des Signals, das dem Diversityprozessor zurückgeführt wird, nur den verhältnismäßig langsamen Änderungen der Empfangsbedingungen infolge von Standortänderungen des Funkteilnehmers entsprechen muß. Aus diesem Grund wird dieses Signal aus einem relativ schmallbandigen Squelsh-Detektor abgeleitet.

Antennendiversity-Anlage werden auch zur Verbesserung des Rundfunkempfanger in Kraftfahrzeugen verwendet.

Bei der Verwendung in Kraftfahrzeugen kommt es sehr auf das dynamische Verhalten der Diversityanlage an. Aufgrund der Fahrzeugbewegung ändern sich die Antennenspannungen laufend, so dass eine andauernde Überprüfung der Signalqualität erforderlich ist. Im Gegensatz zu der aus der EP-A-0036139 bekannten Diversityanlage ist somit die schnelle Erkennung einer vorliegenden Störung im Empfangssignal unverzichtbar. Die bekannte Anmeldung arbeitet langsam, da für eine stationäre Anwendung eine bestimmte Empfangssituation langzeitlich vorliegt. Für den Rundfunkempfang im Kraftfahrzeug ändert sich die Übertragungseigenschaft der Strecke zwischen Sendeantenne und Empfangsantenne laufend während der Fahrt. Durch die Überlagerung elektromagnetischer Wellen mit grossen unterschiedlichen Laufzeiten resultiert am Ausgang des Frequenzdemodulators ein erhöhtes Rauschen und eine Verzerrung der niederfrequenten Nachricht. Im Fall der Stereoaussendung führt dieser Effekt auch zu einem erhöhten Übersprechen zwischen den beiden Stereo-Kanälen. Aufgrund der Bewegung des Fahrzeugs und der Richtwirkung der Empfangsantennen ändern sich Nachbarkanalstörungen und Intermodulationsstörungen. Häufig ist das System auch durch elektrische Störungen der bordeigenen elektrischen Aggregate gestört.

Aufgabe der vorliegenden Erfindung ist es deshalb, eine Antennendiversity-Anlage anzugeben, die den Nachteil der langsamen Störungserkennung vermeidet und bei Vorliegen einer Störung aus einem Angebot von Antennensignalen das beste Antennensignal oder eine Kombination von Antennensignalen auswählt.

Diese Aufgabe wird erfindungsgemäss dadurch gelöst, dass die Anlage ein FM-Tuner mit ZF-Teil enthält, und dem Diversityprozessor ein zwischenfrequentes oder hochfrequentes Signal zurückgeführt wird, welches einer bestimmten aus den Antennensignalen abgeleiteten linearen Kombination entspricht, und der Diversityprozessor einen AM-Demodulator mit einem daran angeschlossenen Amplitudenschwellendetektor und einen FM-Demodulator mit einem daran angeschlossenen Frequenzhubschwellendetektor und Mittel enthält um bei gleichzeitigem Auftreten eines die Amplitudenschwelle des AM-Schwellendetektors überschreitenden Amplitudeneinbruchs und eines die Frequenzhubschwelle des Frequenzhubschwellendetektors überschreitenden störungsbedingten Frequenzhubpulses im zwischenfrequenten oder hochfrequenten Signal eine andere aus den Antennensignalen abgeleitete lineare Kombination den Tuner mit ZF-Teil eingangsseitig zuzuführen.

Die mit der Erfindung erzielten Vorteile bestehen in der Unterdrückung hörbarer Empfangsstörungen auch im schnellbewegten Fahrzeug. Ein wesentlicher Vorteil besteht auch darin, dass ein Hauptteil der bekannten und häufig auftretenden Störungen unterschiedlichster Ursache durch die Erfindung vermieden werden. Zu diesen Störungen gehören insbesondere Amplitudenfading aufgrund von Mehrwegeempfang von Wellen mit kleinen Laufzeitunterschieden, sowie Verzerrungen am Ausgang des FM-Demodulators aufgrund von Mehrwegeempfang überlagerter Teilwellen mit grossen Laufzeitunterschieden, Nachbarkanalstörungen, Intermodulationsstörungen aufgrund des Empfangs grosser unerwünschter Signale und parasitäre von den Aggregaten fremder Fahrzeuge verursachten Störungen.

Ausführungsbeispiele der Erfindung sind in folgenden Zeichnungen dargestellt. Es zeigen:
Figur 1: Ein Blockschema von einer Antennendiversity-Anlage gemäss der Erfindung;
Figur 2: Ein Blockschema eines Diversity-Prozessors, zur Anwendung in der Antennendiversity-Anlage gemäss Figur 1;
Figur 3: Ein Blockschema einer Steuerschaltung zur Anwendung im Diversity-Prozessor gemäss Figur 2;
Figur 4: Ein weiteres Ausführungsbeispiel eines Blockschemas eines Diversity-Prozessors zur Anwendung in der Antennendiversity-Anlage gemäss Figur 2;
Figur 5: Ein Blockschema einer Auswerteschaltung zur Anwendung im Diversity-Prozessor gemäss der Figuren 2 und 4;
Figur 6: Ein graphische Darstellung einer Zeitfunktion eines Rampenimpulses wie in der Auswerteschaltung gemäss Figur 5 auftritt;
Figur 7: Eine graphische Darstellung einer exponentiellen Zeitfunktion eines anderen Beispiels eines Rampenimpulses wie in der Auswerteschaltung gemäss Figur 5 auftritt.
Figur 8: Eine Ausführungsbeispiel einer Matrixschaltung zur Anwendung in der Antennendiversity-Anlage gemäss Figur 2;
Figur 9: Ein weiteres Ausführungsbeispiel einer Matrixschaltung zur Anwendung in der Antennendiversity-Anlage gemäss Figur 2;
Figur 10: Ein weiteres Ausführungsbeispiel einer Matrixschaltung zur Anwendung in der Antennendiversity-Anlage gemäss Figur 2;
Figur 11: Ein Ausführungsbeispiel einer Schaltung zur Bildung eines dynamischen Schwellenwert für Frequenzuhubstörungen zur Anwendung in einer Auswerteschaltung gemäss Figur 15;
Figur 12: Ein Ausführungsbeispiel einer Schaltung zur Bildung eines dynamischen Schwellenwertes für Amplitudenhubstörungen zur Anwendung in einer Auswerteschaltung gemäss Figur 15;
Figur 13: Ein Ausführungsbeispiel einer Stummschaltung zur Anwendung in der Antennendiversity-Anlage gemäss Figur 1;
Figur 14: Ein Ausführungsbeispiel einer geregelten Verstärkung des niederfrequenten Signals im Empfänger zur Anwendung in der Antennendiversity-Anlage gemäss Figur 1;
Figur 15: Ein Ausführungsbeispiel eines Verzerrungsdetektors zur Anwendung in der Antennendiversity-Anlage gemäss Figur 1.

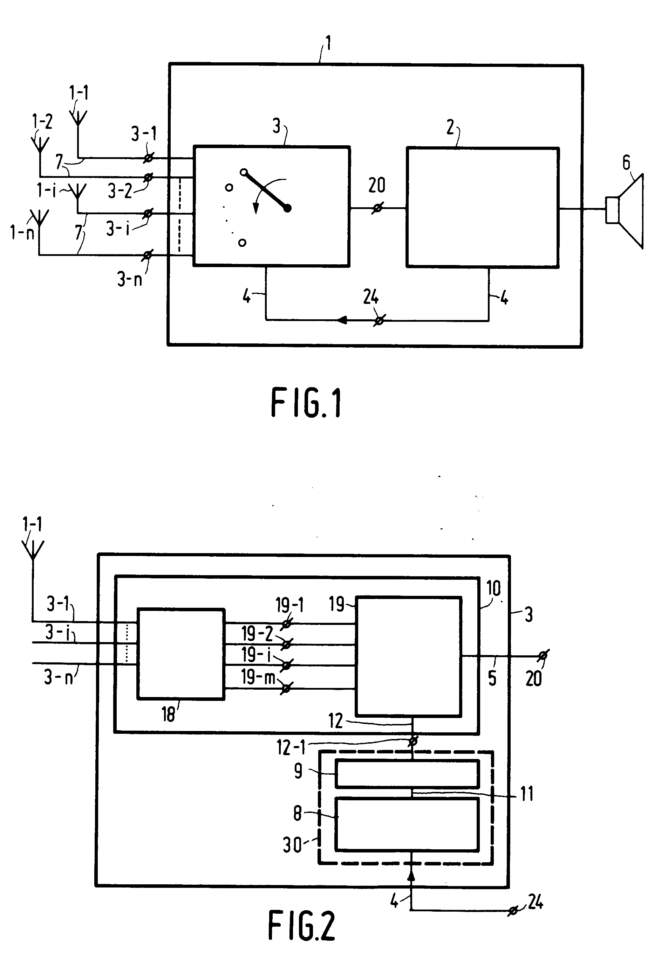

In Figur 1 ist eine Antennendiversity-Anlage 1 mit n Antennen 1-1, 1-2, ..., i-i, ..., 1-n, einem Diversityprozessor 3 mit ebenso vielen Eingängen 3-1, 3-2, ..., 3-i, ... 3-n, einem nachgeschalteten FM-Tuner mit ZF-Teil 2 und einer ZF-Rückführung 4 in dem Diversityprozessor 3 angegeben. Im Diversityprozessor 3 ist gemäss Figur 2 ein Verzerrungsdetektor 8 enthalten, wie zum Beispiel beschrieben in der deutschen Offenlegungsschrift 33 26 062 (& EP-A-0132752) oder in der nicht vorveröffentlichten EP-A-0141218, der bei Erkennen einer eine Frequenzhubschwelle oder zusätzlich eine Amplitudenschwelle überschreitenden Störung im ZF-Signal, ein binäres Signal über eine Leitung 11 an eine Steuerschaltung 9 abgibt. Dieses binäre Signal wird im Falle einer Störung auf näher zu beschreibende Weise, veranlassen, dass das via Leitung 5 dem FM-Tuner mit ZF-Teil 2 zugeführt Hochfrequenzsignal auf eine andere Weise aus den Antennensignalen der Antennen 1-1, ..., 1-n abgeleitet wird. Aufgrund der kurzen Erkennungszeit des Diversityprozessors 3 für das Vorliegen einer Störung, können in kurzer Zeit entsprechend viele Signalkombinationen, die sich aus den Antennensignalen herleiten lassen, auf ihre Signalqualität überprüft werden. Auf diese Weise ist sichergestellt, dass zu jedem Zeitpunkt bei Existenz mindestens eines ungestörten Kombinationssignals ein solches Signal durch Auswahl an Klemme 20 erscheint.

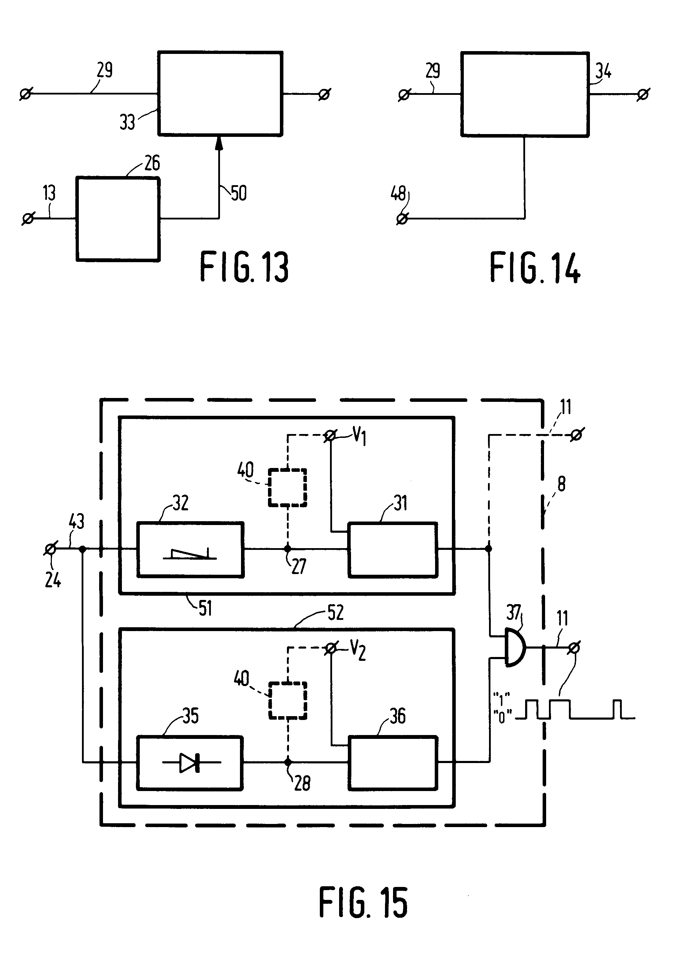

In einer besonders vorteilhaften Ausgestaltung gemäss Figur 2 ist der Diversityprozessor 3 mit einem Antennencombiner 10 und einer Auswerteschaltung 30 ausgestattet. Aufgabe des Antennencombiners 10 ist es, aus den n angelieferten Antennensginalen der Antennen 1-1, ..., 1-n eine Reihe von m Linearkombinationen zu bilden und eine dieser Linearkombinationen jeweils zum FM-Tuner mit ZF-Teil 2 durchzuschalten. Bei Auftreten einer Störung nach einem Störungskriterium in der Auswerteschaltung 30 ist der Antennencombiner 10 derart eingerichtet dass unter Ansteuerung der Auswerteschaltung 30 eine andere Linearkombination zum FM-Tuner mit ZF-Teil 2 durchgeschaltet wird. Im Antennencombiner 10 ist zu diesem Zwecke eine Matrixschaltung 18 und ein Signalselektor 19 enthalten wobei die Matrixschaltung die n Antennensignale zu m Linearkombinationen dieser Signale verknüpft. Der auf der Matrixschaltung 18 angeschlossene Signalselektor 19 ist im allgemeinsten Fall ein adressierbarer Schalter, der bei Ansteuerung mit einem durch die Auswerteschaltung 30 auf die Leitung 12 abgegebenen Adresssignal einen bestimmten Signaleingang 19-1, ... 19-m mit dem Ausgang 20 verbindet. Besonders vorteilhaft ist eine binäre Ausgestaltung des Adressignals auf Leitung 12. In einer vorteilhaften Form wird die Auswerteschaltung 30 durch einen Verzerrungsdetektor 8 und eine Steuerschaltung 9 gebildet. Der Verzerrungsdetektor 8 besteht entweder zum Beispiel aus einem breitbandigen FM-Demodulator 32 (Figur 15) mit nachgeschaltetem erstem Frequenzhubschwellendetektor 31 mit direkter Signalabgabe (sehe gestrichelte Linie) oder, wenn gewünscht, zusätzlich aus einem AM-Demodulator (35) mit einem nachgeschalteten zweiten Schwellendetektor (36) und eine UND-Schaltung (37) welche beide in der Figur 15 dargestellt sind. Das genannten Störungskriterium liegt bei ausschliesslicher Verwendung eines FM-Demodulators dann vor, wenn ein Frequenzhubstörung im ZF-Signal der Rückführung 4 (Figur 2) erscheint, der eine vorliegende Frequenzhubschwelle V₁ (Fig. 15) des geeignet eingestellten Frequenzhubschwellendetektors (31), der durch eine Komparatorschaltung gebildet ist, überschreitet. Somit ist die Schaltung 51 ein Frequenzstörhubindikator. Im Falle der zusätzlichen Verwendung eines AM-Demodulators (35) ist das genannte Störungskriteriüm dann gegeben, wenn sowohl ein Amplitudeneinbruch vorliegt, der eine geeignet eingestellte Amplitudenschwelle V₂ des AM-Schwellendetektors (36), der ebenfalls durch eine Komparatorschaltung gebildet ist, überschreitet, als auch eine Frequenzhubstörung erscheint, der die obengenannte Frequenzhubschwelle V₁ des Frequenzhub-Schwellendetektors (31) überschreitet. Durch die Verknüpfung in der UND-Schaltung (37) wird auf diese Weise ein besonders sichere Störungskennung erzielt. Bei Vorliegen des Störungskriteriums wird durch den Verzerrungsdetektor 8 über die Leitung 11 das logische Signal "1" (siehe Figur 15) an die Steuerschaltung 9 in der Auswerteschaltung 30 weitergegeben. Beim Vorliegen dieses Signals wird in der Steuerschaltung 9, z.B. mit Hilfe eines Monoflops 14 ein Puls generiert. Dieser Puls wird gegebenenfalls einem nicht gezeichneten µ-Prozessor zugeführt, der in Antwort darauf ein binäres Adresssignal, zum Beispiel den Zählerstand eines nicht gezeichneten Pulszählers, an den Signalselektor 19 weitergibt, um so einen bestimmten Signaleingang 19-j, (j=1, 2, ..., m) mit dem Eingang 20 des FM-Tuners 2 zu verbinden. In einem weiteren Ausführungsbeispiel werden die Signaleingänge 19-1, ..., 19-m am Signalselektor 19 nach einer bestimmten in dem µ-Prozessor der Steuerschaltung 9 gespeicherten Prioritätenliste mit dem Eingang 20 des FM-Tuners mit ZF-Teil 2 bei Auftreten des Störungskriteriums verbunden. Entsprechend dieser Prioritätenliste werden in der Steuerschaltung 9 Adresssignale 12 generiert. Eine derartige Prioritätenliste wird anhand von vorausgehenden Empfangsmessungen am Fahrzeug und der Feststellung der Effizienz der verschiedenen Linearkombinationen der Antennensignale festgelegt und in der Steuerschaltung 9 des Diversityprozessors 3 implëmentiert. In einem besonders einfachen Ausführungsbeispiel werden die Signaleingänge 19-1, ..., 19-m mit gleicher Priorität belegt und die Signaleingänge 19-1, ..., 19-m werden bei Auftreten des Störkriteriums zyklisch mit dem FM-Tuner mit ZF-Teil 2 verbunden.

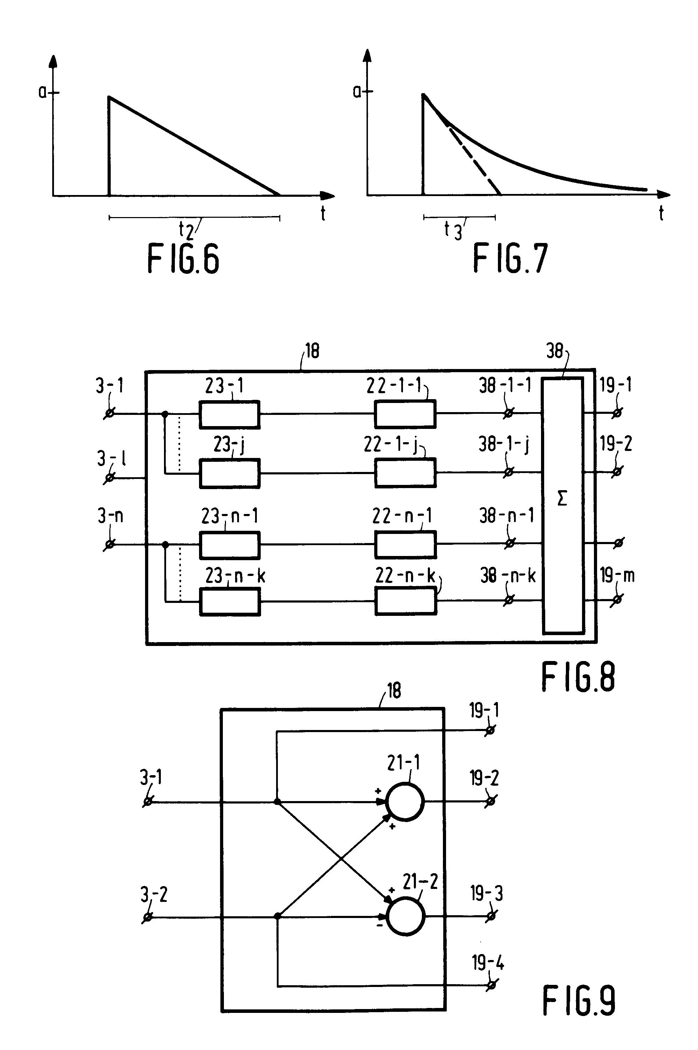

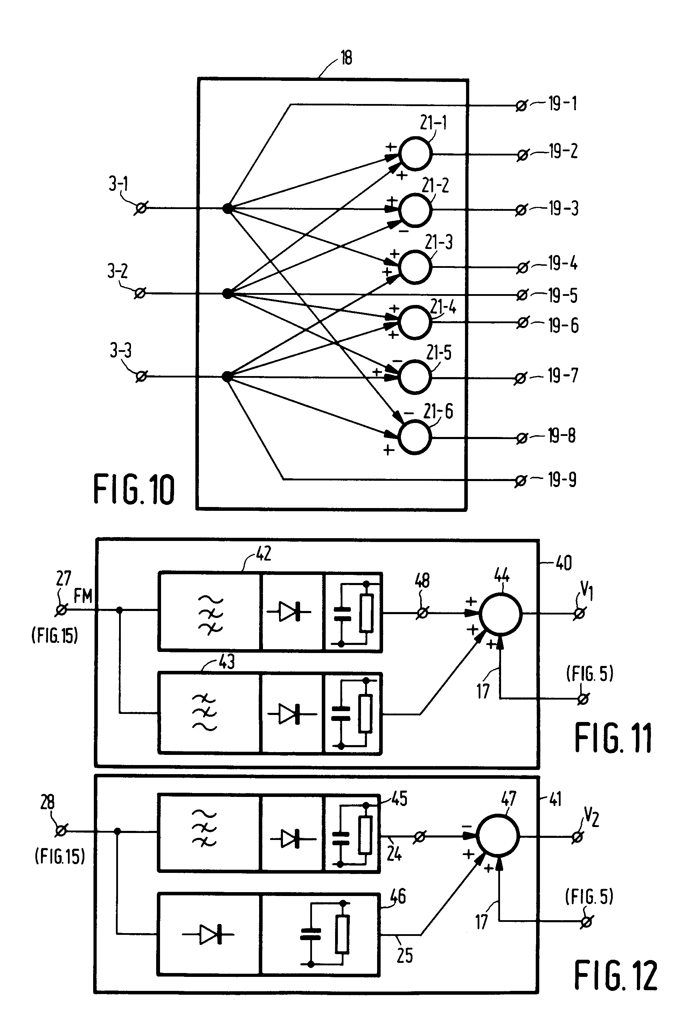

Die Matrixschaltung 18 ist im allgemeinen, wie Figur 2 zeigt, mit n Antenneneingängen 3-1, ..., 3-n und der Signalselektor 19 mit m Signaleingängen 19-1, ..., 19-n versehen. Jeder Antenneneingang 3-j, (j=1, 2, ..., n) ist dabei mit einem Signaleingang 19-j (j=1, 2, ..., n) des Signalselektors 19 über ein Amplitudengewichtungsglied (Figur 8) 23-1, 23-j; ...; 23-n-1, 23-n-k und ein Phasendrehglied 22-1, ..., 22-j; ...; 22-i-1, 22-n-k verbunden. In einer nachfolgenden Summenschaltung 38 werden bestimmte Signale auf den Eingängen 38-1-1, ..., 38-1-j; ...; 38-n-1, ..., 38-n-k) durch Summation miteinander zu m Signalen an den Ausgängen 19-1, ..., 19-m verknüpft. Wesentlich für eine gute Wirkung ist, dass die aus Linearkombinationen der Antennensignale gebildeten Selektoreingangssignale (19-1, ..., 19-m) statistisch möglichst unabhängig voneinander sind. Linearkombinationen werden dadurch gebildet, dass jedes Antennensignal in der Amplitude gewichtet und in der Phase mit Hilfe eines Phasenschiebers (22-1, ..., 22-n) (Figur 8) verändert wird und alle Signale zusammengefasst werden. Dazu sind dieAmplitudengewichtungsglieder (23-1, ..., 23-n) zum Beispiel derart gestaltet, dass die Mittelwerte der Empfangssignale an den Selektoreingängen (19-1. ..., 19-n) untereinander gleich gross sind. Im Falle der Verwendung von Antennen mit Verstärkern sind die Amplitudengewichtungsglieder (23-1, ..., 23-n) so eingestellt, dass die Signalrauschverhältnisse an den Selektoreingängen (19-1, ..., 19-n) nahezu gleich sind. Dadurch wird sichergestellt, dass die mittlere Signalqualität an allen Selektoreingängen 19-1, ..., 19-n gleich ist und somit jeder Selektoreingang 19-j (j=1, 2, ..., n) mit gleicher Wahrscheinlichkeit für den Empfangsbetrieb herangezogen wird. Bei angenähert gleicher Leistungsfähigkeit der Antennen (1-1, ..., 1-n) können diese Amplitudengewichtungsglieder (23-1, ..., 23-n) als einfache Durchschaltungen ausgeführt werden. Die Phasendrehglieder (22-1-1, ..., 22-1-j; ...; 22-n-1, ..., 22-n-k) werden empirisch derart eingestellt dass bei Störung von mehreren Antennensignalen die Wahrscheinlichkeit für die Störungsfreiheit des kombinierten Signals möglichst gross ist. Vielfach ist die Zahl n der an einem Fahrzeug verwendbaren Antennen auf eine niedrige Zahl begrenzt. In diesem Fall ist es zweckmässig die Zahl m der Selektoreingänge (19-1, ... 19-m) grösser zu wählen, als die Zahl n der Antennen. Im einfachsten Fall kann auch m = n sein und die Matrixschaltung 18 verbindet die Eingänge 3-1, ..., 3-n mit den jeweils entsprechenden Ausgängen 19-1, ..., 19-n direkt durch. Besonders vorteilhaft ist die Schaffung von vier Signalen an Eingängen (19-1, ..., 19-4) von Signalselektor 19, deren Signale aus 2 Antenneneingangssignalen an Eingängen 3-1, 3-2 gibildet werden. Dies geschieht z.B., wie Figur 9 zeigt, durch Summen- und Differenzbildung der beiden Antenneneingangssignale in Summier - und Differenzschaltungen 21-1, 21-2 bei denen das Summensignal und das Diffenzsignal den Signaleingängen 19-2 und 19-3 zugeführt werden und bei dem die getrennte Zuführung der Antenneneingangssignale zu weiteren zwei Signaleingängen 19-1, 19-4 vom Signalselektor 19 erfolgt. Somit lassen sich aus jeweils zwei Antenneneingangssignale an vier Signalselektoreingänge 19-1, ... 19-4 vier weitgehend voneinder unabhängige Eingangssignale bilden. Figur 10 zeigt die beispielhafte Anwendung dieses Prinzips mit drei Antenneneingangssignalen 3-1, 3-2, 3-3, aus denen neue Eingangssignale für die Signalselektoreingänge 19-1, ..., 19-9 gebildet werden. Versuche haben gezeigt, dass die Vergrösserung der Anzahl m der Signalkombinationen bei vorgegebener Antennenzahl n eine wesentliche Verbesserung des Empfangs mit der Antennendiversity-Anlage bewirkt. Diese Verbesserung ist jedoch kleiner als mit der Verwendung einer entsprechenden Vielzahl zusätzlicher unabhängig voneinander empfangender Antennen. Bei einer vorgegebenen Anzahl n von Antennen am Fahrzeug, die nicht unabhängig voneinander emfangen, das heisst deren Signale nicht vernachlässigbar miteinander korreliert sind, können durch Empfangsmessungen am Fahrzeug besonders günstige Linearkombinationen von Antennensignalen mit Hilfe geeigneter Amplitudengewichtungsglieder 23-1, ..., 23-n und Phasendrehschieber 22-1, ..., 22-n gebildet werden, derart, dass das Auftreten der Störungen an bestimmten Ausgängen unabhängiger wird. Diese Kombinationen können in der Matrixschaltung 18 entsprechend realisiert werden.

Figur 15 zeigt den grundsätzlichen Aufbau einer beispielhaften Ausführungsform des Verzerrungsdetektors 8. In diesen Fall erfolgt sowohl eine Auswertung des Frequenzstörhubs als auch der störungsbedingten Amplitudenmodulation im zwischenfrequenten bzw. hochfrequenten Signal 4.

In einer besonders einfachen Ausführungsform wird die Störung des Signals 4 ausschliesslich aus dem Frequenzstörhub ermittelt. In diesen Fall besteht der Frequenzstörhubindikator 51 beispielhaft aus einen Frequenzdemodulator 32, dessen Ausgangssignal 27 dem Frequenzhubschwellendetektor 31 zugeführt ist. Der Frequenzhubschwellendetektor 31 zugeführt ist. Der Frequenzhubschwellendetektor 31 ist in einer einfachen Ausführungsform als Komparatorschaltung realisiert. Überschreitet der aktuelle Frequenzhub eine entsprechend vorgegebene Schwelle V1, so zeigt das Ausgangssignal des Frequenzhubschwellendetektors 31 binär das Vorliegen einer Störung im Frequenzhub an. Der Frequenzdemodulator 32 bildet in Verbindung mit dem Frequenzhubschwellendetektor 31 somit einen Frequenzstörhubindikator 51, dessen Anzeige von der Einstellung der in ihm gebildeten Schwelle V1 abhängt, die grösser eingestellt ist als der aktuelle Frequenznetzhub.

In einer besonders leistungsfähigen Ausführungsform des Verzerrungsdetektors 8 wird im Störamplitudenmodulationsindikator 52 in Figur 15 die störungsbedingte Amplitudenmodulation des frequenzmodulierten Signals 4 zusätzlich mit Hilfe eines an sich bekannten Amplitudendemodulators 35 gewonnen, dessen Ausgangssignal 28 in einem nachgeschalteten Komparator 36 mit einer Schwelle V2 verglichen wird. Das Ausgangssignal des Komparators 36 zeigt somit binär das Vorliegen einer Amplitudenstörung an. Eine besonders sichere und schnelle Anzeige einer Störung ist gewährleistet, wenn mit Hilfe einer UND-Schaltung 37 das gleichzeitige Vorliegen einer Frequenzhub- und Amplitudenstörung anhand des binären Ausgangssignals 11 der UND-Schaltung 37 festgestellt wird. Liegen also am Ausgang des Frequenzstörhubindikators 51 und am StöramplitudenmodulationsIndikator 52 gleichzeitig Störindikationen vor, so wird am Ausgang der UND-Schaltung 37 im logischen Signal 11 eine Störung des zwischenfrequenten oder hochfrequenten Signals 4 angezeigt.

In einem besonders einfachen Ausführungsbeispiel ist die Frequenzhubschwelle V₁ beziehungsweise die Amplitudenschwelle V₂im Verzerrungsdetektor 8 auf einen mittleren, für eine Vielzahl von Empfangsfällen geeigneten Wert fest eingestellt.

Das Störungskriterium für die FM-Störung liegt vor, wenn die Frequenzhubschwelle V₁ vom Frequenzhub im zwischenfrequenten oder hochfrequenten Signal am Punkt 27 überschritten wird, oder im Fall der gleichzeitigen Verwendung eines Amplitudendemodulators 35 auch die Amplitudenschwelle V₂ bei Vorliegen eines Amplitudeneinbruches an Punkt 28 überschritten wird. Es ist bekannt, dass die mit einem System mit einer Antenne hörbaren Störungen sehr stark von der aktuellen Empfangssituation abhängig sind, stark unterschiedlichen Charakter haben und mit der Zeit stark variieren. Mit fest eingestellten Schwellen für die Störungserkennung werden zwar die Störungen sehr schnell erkannt, die Umschalthäufigkeit im Signalselektor 19 hängt dann jedoch sehr stark von der Grösse und der Art der Störungen ab. Bei Vorliegen grosser Störungen schaltet das System zu häufig zwischen den Selektoreingängen 19-1, ..., 19-n um und bei Vorliegen verhältnismässig kleiner, jedoch noch hörbarer Störungen schaltet das System nicht weiter. Zusätzlich ist das System nicht in der Lage, aus dem Angebot der Selektoreingangssignale immer das aktuell beste Signal zum FM-Tuner mit ZF-Teil 2 durchzuschalten. Es ist deshalb besonders vorteilhaft die Schwellen dynamisch dem mittleren Störgrad anzupassen. Dieser Störgrad resultiert aus dem Ausmass des Amplitudenfading, dem Mehrwegeempfang mit grossen Laufzeitunterschieden, Intermodulationsstörungen sowie Nachbarkanalstörungen bei mangelnder Trennschärfe des FM-Tuner mit ZF-Teil 2. Es ist sehr vorteilhaft die Schwellen mit wachsendem mittleren Störgrad anzuheben. Dies bewirkt, dass die Umschalthäufigkeit auch in Empfangsgebieten mit grossen Störungen nicht zu gross wird und es stellt sich hierbei der sehr wesentliche Vorteil ein, dass durch die dynamische Nachführung der Schwellen das System dasjenige Signal der am Eingang des Signalselektors 19 vorliegenden Signale zum FM-Tuner mit ZF-Teil 2 durchschaltet, das bei dem Suchvorgang die kleinste Störung besitzt. Hierfür kann der Störgrad auf an sich bekannte Weise ermittelt und die Schwellen entsprechend gesteuert werden.

Die Steuerung der Schwellen erfolgt auf besonders vorteilhafte Weise entsprechend der Signaleigenschaften des hochfrequenten bzw. zwischenfrequenten Signals 4. Die Frequenzhubeigenschaften dieses Signals 4 liegen als Signal 27 am Ausgang des Frequenzdemodulators 32 vor. Auf besonders vorteilhafte Weise wird die Frequenzhubschwelle V1 mit Hilfe einer Frequenzschwellenregeleinrichtung 40 aus dem Ausgangssignal 27 des Frequenzdemodulators 32 gewonnen. Im Falle der zusätzlichen Auswertung der störungsbedingten Amplitudenmodulation ist es besonders vorteilhaft, auch die Amplitudenschwelle V2 dynamisch einzustellen. Dies geschieht erfindungsgemäss mit Hilfe einer Amplitudenschwellenregeleinrichtung 41, welche die Schwelle V2 aus dem Ausgangssignal 41, welche die Schwelle V2 aus dem Ausgangssignal 28 des Amplitudendemodulators 35 erzeugt.

Figur 11 beschreibt eine vorteilhafte Ausführungsform der Frequenzschwellenregeleinrichtung 40. In diesem Beispiel wird die dynamisch nachgeführte Schwelle V1 aus 3 Teilsignalen gebildet. Eines der 3 Teilsignale wird aus dem Rausch-Signalverhältnis abgeleitet. Dies geschieht mit Hilfe der N/S-Schaltung 42, die aus einem Hochpassfilter mit nachgeschaltetem Gleichrichter mit einer Entladezeitkonstante gebildet ist. Das Ausgangssignal 48 der Mittelwertschaltung 42 wird in der Summiershcaltung 44 den anderen Teilsignalen überlagert. In einer besonders vorteilhaften Weiterbildung der Schaltung wird eines der Teilsignale aus dem Signal 27 mit Hilfe eines Frequenznutzhubmessers 43, bestehend aus einem Tiefpassfilter mit nachgeschaltetem ersten Gleichrichter und erstem Integrator gewonnen. Im Ausführungsbeispiel in Figur 11 wird aus der Steuerschaltung 9 in Figur 5 mit Hilfe eines Wechselhäufigkeitsdetektors 16, bestehend aus einer Gleichrichterschaltung mit Integrator aus den binären Schaltsignalen 13 ein weiteres Teilsignal in Form des Signals 17 gewonnen. Durch geeignete Gewichtung der in der Summierschaltung 44 überlagerten Teilsignale wird eine besonders günstige dynamische Steuerung der Frequenzhubschwelle V1 erreicht. Diese Gewichtung ist derart vorzunehmen, dass einerseits die Empfindlichkeit der Störungsanzeige ausreichend gross ist und andererseits eine Fehlindikation durch den Frequenznutzhub ausgeschlossen ist.

Besonders vorteilhaft für die Erkennung für das Vorliegen der eingangs genannten Empfangsstörungen ist die gleichzeitige Anwendung des Amplitudenmodulators mit einer dynamischen Amplitudenmodulationsschwelle V2. Die Amplitudenstörung ist durch kurzzeitige Amplitudeneinbrüche im Signal 4 gekennzeichnet. Die Tiefe der Amplitudeneinbrüche im Signal 4 gekennzeichnet. Die Tiefe der Amplitudeneinbrüche ist ein Mass für das Ausmass der Störung. Die Spannung am Ausgang des Amplitudendemodulators besteht im störungsfreien Fall aus einer zeitunabhängigen Gleichspannung, deren Grösse der Amplitude des Signals 4 entspricht und besitzt im Störungsfall entsprechende Einbrüche. Um das Ausmass der vorliegenden Störung bewerten zu können, müssen die Einbrüche an der Gleichspannung gemessen werden. Dies geschieht durch Anheben der Amplitudenmodulationsschwelle V2 mit wachsender Amplitude des Signals 4. Dies geschieht mit Hilfe eines Tiefpasses in der Schaltung 46, an dessen Ausgang eine der Teilspannungen zur Anhebung der Amplitudenmodulationsschwelle V2 in Form des Signals 25 vorliegt. Um zwischen den unterschiedlichen Signalqualitäten der Antennensignale unterscheiden zu können, ist es notwendig, die Amplitudenmodulationsschwelle V2 zusätzlich in Abhängigkeit der Amplitudeneinbrüche des Signals 4 geeignet anzuheben. Dies geschieht auf vorteilhafte Weise durch zusätzliche Verwendung eines Spitzenwertgleichrichters mit Entladezeitkonstante in der Schaltung 46, in der das Ausgangssignal des Tiefpasses zu der Ausgangsspannung des Spitzenwertgleichrichters hinzu addiert wird. Zur Vermeidung einer zu grossen Umschalthäufigkeit bei stark verrauschten Signalen wird in einer vorteilhaften Weiterführung der Erfindung die Amplitudenmodulationsschwelle V2 mit kleiner werdendem Signal-Rauschverhältnis entsprechend angehoben. Dieses Rauschen findet sich im Ausgangssignal 28 des AM-Demodulators 35 wieder. Die Auswertung des Rausch-Signalverhältnisses (N/S) erfolgt in Schaltung 45 und wird als Gleichspannung 24 in der Summierschaltung 47 dem Signal 25 überlagert. Die Gleichspannung 24 wird hierbei z.B. mit Hilfe eines Hochpasses und eines nachgeschalteten Gleichrichters mit Tiefpass mit einer Grenzfrequenz, die vorzugsweise unterhalb der niedrigsten Hörfrequenz liegt, gewonnen. Die Grenzfrequenz des Hochpasses wird so hoch gewählt, dass er die nicht zu Empfangsstörungen führenden Amplitudenschwankungen (Fahrzeugbewegung) nicht erfasst.

Die Integration des Stör-Signalabstandes (N/S), wie beschrieben, erfolgt vorzugsweise mit den in den Fig. 11 und 12 wiedergegebenen zeitlichen Mittelwertsbildungsschaltungen in Form der den Gleichrichtern nachgeschalteten Tiefpässe für die Bildung der Signale auf der Leitung 48 bzw. Leitung 24. Dies geschieht z.B. auf bekannte Weise mit Hilfe einer Kapazität.
Diese Schaltungen 44 und 45 bieten die Möglichkeit, in schlechten Empfangslagen mit verhältnismässig grossen Mittelwerten der Störung die Schaltschwellen geeignet anzuheben und somit die Umschalthäufigkeit zu reduzieren. Zu grosse Umschalthäufigkeit ist stets mit einer Unruhe des Systems und schaltungsbedingten Reststörungen verbunden. Durch die Anhebung der Schaltwschwellen wird auf ideale Weise bewirkt, dass während der Fahrt stets die Antenne 1-i (i=1, 2, ..., n) mit dem besten Signalstörabstand beziehungsweise nur die Signalkombinationen der Antennen mit den besseren Signalen ausgewählt werden. Durch Einstellung einer geeigneten Entladecharakteristik kann die Umschalthäufigkeit derart eingestellt werden, dass in den verschiedenen Versorgungsgebieten ein günstiger dynamischer Ablauf des Suchvorgangs nach einem ungestörten Signal bewirkt wird. Im einfachsten Fall wird der Entladevorgang auf an sich bekannte Weise durch Parallelschaltung eines ohmschen Widerstanes zur Kapazität realisiert. Durch Einstellung derEntladezeitkonstante kann die oben erwähnte Umschalthäufigkeit geeignet gewählt werden. Hierbei ist es besonders vorteilhaft, wenn die Entladezeitkonstante wesentlicher grösser gewählt wird als die minimal vorkommende Aufschaltzeit eines Antennensignals. Diese Aufschaltzeit ist im Falle einer vorliegenden, die Schwelle überschreitende Störung, auf die Prüfzeit des Detektors inklusive der durch den FM-Empfänger mit ZF-Teil 2 bedingten Laufzeit beschränkt. Die Gruppenlaufzeit des FM-Emfänger mit ZF-Teil 2 ist im allgemeinen durch seine ZF-Bandbreite nach unten begrenzt und beträgt circa 20 µs. In einem weiteren Ausführungsbeispiel wird die Gesamtheit der Störungen mit Hilfe des Verzerrungsdetektors 8 in Form eines binaren Signals gewonnen und auf geeignete Weise, wie im folgenden beschrieben, zu Anhebung der Schwelle V₁ beziehungsweise V₂ verwendet. Hierfür ist die Verwendung der am Ausgang des Verzerrungsdetektors 8 vorliegenden binären Signalfolge auf der Leitung 11, die an die Steuerschaltung 9 weitergegeben werden, geeignet. Je grösser die Häufigkeit der Pulse ist, die wie schon beschrieben, in der Steuerschaltung 9 entstehen und die das Vorliegen einer Störung anzeigen, umso schlechter ist die aktuelle Empfangssignalqualität und umso grösser ist demnach die Gesamtheit der Störungen.

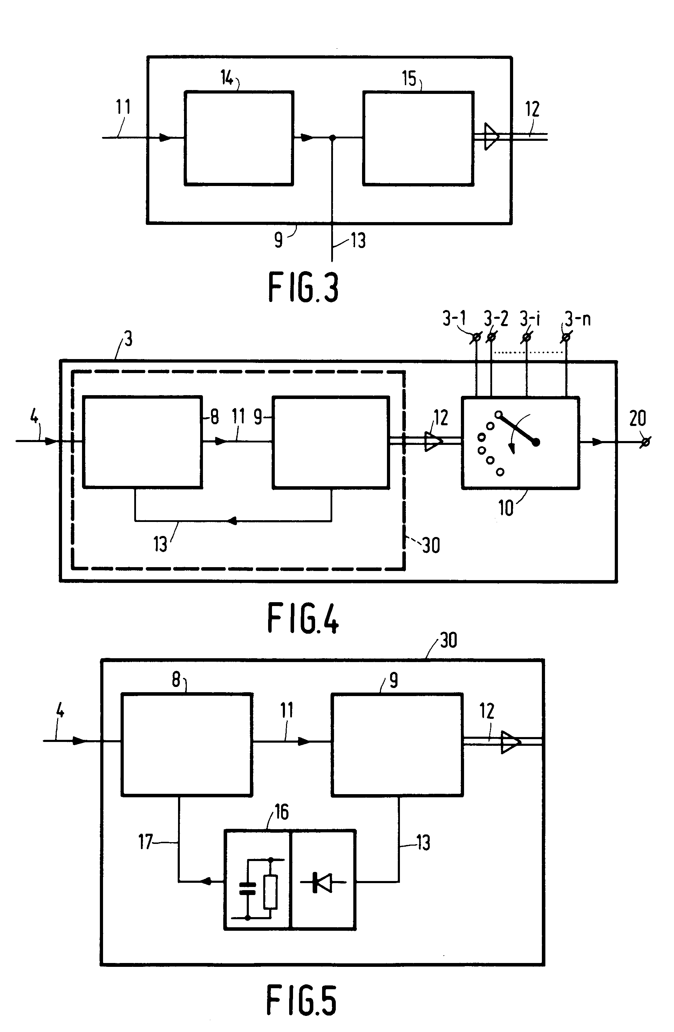

In einem Ausführungsbeispiel, gemäss Figur 4, werden entweder die Häufigkeit des Auftretens einer Störung aus dem Binärsignal auf Leitung 11 gewonnen, die der Verzerrungsdetektor 8 an die Steuerschaltung 9 weitergibt, beziehungsweise aus dem Adressignal auf Leitung 12 abgeleitet, und als binäres Schaltsignal auf Leitung 13 zum Verzerrungsdetektor 8 zurückgeführt und als Signal auf Leitung 17 in Figur 11 oder 12 zur Anhebung der Schwellenspannung V₁ oder V₂ verwendet. Ein Ausführungsbeispiel zeigt Figur 5 wo die Häufigkeit des Auftretens einer Störung aus Pulssignalen durch einen Wechselhäufigkeitsdetektor 16, z.B. einen Gleichrichter mit nachgeschaltetem Tiefpass, gewonnen wird, und von Leitung 17 den Verzerrungsdetektor zur Anhebung von V₁ beziehungsweise V₂ zugeführt wird. Die umgeformten und integrierten Pulse werden dabei direkt der momentan bestehenden Schwellenspannung überlagert. Dies gilt sowohl für die Amplitudenschwelle V₂ als auch für die Frequenzhubschwelle V₁. In einer einfachen Ausführungsform können die Pulse in dem Wechselhäufigkeitsdetektor 16 in eine Rampenfunktion, wie gezeigt in Figur 6, umgeformt werden und nachher integriert werden. Hierbei wird die Zeit t2 der Rampe geeignet eingestellt derart, dass sich abhängig von der mittleren Empfangsqualität eine geeignete Umschalthäufigkeit einstellt. In einer weiteren Ausführungsform der Erfindung wird eine Exponentialfunktion durch Aufladung eines Kondensators zur Integration und gleichzeitiger Entladung über einen parallel geschalteten ohmschen Widerstand verwendet. Hierbei kann die Entladezeitkonstante t3 in Figur 7 durch Wahl eines geeigneten Produkts aus Kapazität und Widerstand passend gewählt werden. Durch diese Massnahmen wird bewirkt, dass durch entsprechende Anhebung der Umschaltschwellen V₁ beziehungsweise V₂ auch bei empfangsunwürdigen Empfangssignalen auf allen Antennen sich eine begrenzte Umschalthäufigkeit einstellt. Die Störungen, die durch das laufende Suchen des Systems nach einem empfangswürdigen Signal erzeugt werden, bleiben damit auf einen tolerierbaren Wert begrenzt. Im Falle sehr grosser Störungen sind die Frequenzstörhubspitzen aller Signale so gross, dass sie die jeweiligen Schwellen V1 bzw. V2 überschreiten. In diesem Falle wird das günstigste Signal am Eingang des Signalselektors 19 ausgewählt. Ein weiteres vorteilhaftes Ausführungsbeispiel ermittel die Schalthäufigkeit des Signalselektors 19. Mit jeder Weiterschaltung des Signalselektors 19 entsteht im ZF-Signal auf Leitung 4, bedingt durch die stets unterschiedlichen Momentanwerte der Trägeramplitude, an den verschiedenen Signaleingängen 19-1, ..., 19-m des Signalselektors 19, ein Amplitudensprung. In einem besonders einfachen Ausführungsbeispiel wird zum Zwecke der Erzeugung von Pulsen zum Umschaltzeitpunkt ein Amplitudenmodulation empfindlicher FM-Modulator z.B. einen Ratiodetektor, verwendet, der bei Amplitudensprüngen Ausgangspulse abgibt. Solche FM-Demodulatoren sind in der Rundfunkempfangstechnik bekannt und haben diese Eigenschaft, wenn der Demodulator, wie üblich, nicht exakt auf die Mittenfrequenz abgestimmt ist. Diese Pulse werden auf an sich bekannte Weise zeitlich gemittelt und der aktuelle Mittelwert wird zur Anhebung der Schwellen benutzt.

In einem weiteren Ausführungsbeispiel wird die Umschalthäufigkeit an das vorliegende Signal-Rauschverhältnis S/N angepasst. Um zu verhindern, dass bei zu kleinem Signal-Rauschverhältnis die Umschalthäufigkeit zu gross wird und dadurch zusätzliche Störungen durch Umschalten entstehen, wird das Verhältnis von Rauschinhalt zu Signalinhalt N/S festgestellt. In dem Ausführungsbeispiel in Fig. 11 wird der mittlere Stör-Signalabstand N/S mit Hilfe der N/S-Schaltung 42 gewonnen. Diese besteht aus einer Hochpasschaltung, deren Grenzfrequenz vorzugsweise oberhalb der höchsten vorkommenden Frequenz des Nutzmodulationssignals liegt und einer nachgeschalteten Gleichrichterschaltung mit Mittelwertsbildung, die mit Hilfe eines nachgeschalteten Integrators erfolgt. In Fig. 11 wird der mittlere Signalstörabstand der Signale an den Signaleingängen 19-1, ..., 19-m des Signalselektors 19 während der Aufschaltzeit durch die N/S-Schaltung 42 ermittelt. Als Aufschaltzeit wird die Zeit bezeichnet, innerhalb deren das System nicht weiterschaltet und demnach der momentane Signalstörabstand kleiner ist als der Momentanwert einer eingestellten Schaltschwelle.

In einer weiteren Ausführungsbeispiel wird die Entladezeitkonstante des Integrators im Frequenznutzhubmesser 43 (Figur 11) von der Art der Modulation abhängig gestalten. Sie ist beispielhaft bei Sprachsendungen verhältnissmässig kurz und bei Musiksendungen verhälntismässig lang eingestellt. Bei Verwendung einer Musik-Sprach-Detektor kann der in der Regel bei Sprachsendungen grösseren Modulationshubspitzen Rechnung getragen werden und ein besseres Verhältnis von Umschalthäufigkeit und Signalqualität erzielt werden. In einer besonders einfachen Ausführungsbeispiel wird der Modulationsfrequenznutzhub auf bekannte Weise, wie in Figur 11, mit dem Frequenznutzhubmesser 43 gemessen und mit wachsenden Frequenznutzhubspitzen die Entladezeitkonstante entsprechend verkürzt. Die Entladezeitkonstante kann auf an sich bekannte Weise mit Hilfe eines elektronisch einstellbaren Widerstandes und eines konstanten Kondensators eingestellt werden. Eine weitere Ausführung sieht geeignete Anhebung der Frequenzhubschwelle in Abhängigkeit von der Häufigkeit der Frequenzstörhubzpitzen vor.

Besonders vorteilhaft für den Betrieb der Antennendiversity-Anlage 1 ist die gleichzeitige Auswertung der störungsbedingten Frequenzhubspitzen und der gleichzeitig auftretenden störungsbedingten Amplitudeneinbrüche des hochfrequentenbeziehungsweise zwischenfrequenten Trägers. Mit dem Auftreten von Frequenzstörhubspitzen ist jeweils ein Amplitudeneinbruch verbunden. Das Ausmass des momentanen Amplitudenmodulationsgrad, der mit einer Frequenzstörhubspitze gleichzeitig auftritt, wird an die Amplitudenschwelle V₂ (Figur 15) gemessen. Ist der Einbruch grösser als die Schwelle und liegt gleichzeitig eine Frequenzstörhubspitze vor, dann ist es sicher, dass das Empfangssignal im Moment gestört ist und das System nach einem anderen Signal am Eingang des Signalselektors 19 suchen soll. Besonders vorteilhaft hierbei ist die dynamische Einstellung der Amplitudenschwelle in Abhängigkeit von den Signaleigenschaften. Hierbei liefert der mittlere Wert der Trägeramplitude am Ausgang der Schaltung 46 (Figur 12) ein günstiges Kriterium für die Einstellung der Amplitudenschwelle. Mit kleiner werdender mittleren Trägeramplitude wird die mittlere Signalqualität kleiner und ein Beibehalten der Schaltschwellen würde zu einer unzweckmässig grossen Umschalthäufigkeit führen. Um diesen Nachteil zu vermeiden, wird die mittlere Trägeramplitude von Schaltung 46 ermittelt und in der Summationsschaltung 47 zur Einstellung der Schaltschwelle V₂ verwendet.

In einer weiteren Ausführung der Erfindung wird der Energieinhalt der Frequenzstörhubspitzen mit zur Auswertung der Frequenzhubstörung herangezogen. Insbesondere bei grossen Störungen ist es wünschenswert, die Unterschiedlichkeit der Störungen der verschiedenen an den Signaleingängen liegenden Signalen festzustellen, um das am wenigsten gestörte Signal auswählen zu können. Weiterhin ist es wünschenswert, bei sehr grossen Störungen die Umschalthäufigkeit auf ein geeignetes Mass zu begrenzen. Diese Ziele werden zum Beispiel dadurch erreicht, dass dem Frequenzdemodulator 32 in Figur 15 ein dort nicht gezeichnetes Tiefpassfilter mit variabel einstellbarer Grenzfrequenz nachgeschaltet wird. Dadurch wird bewirkt, dass nicht nur der Momentanwert der störungsbedingten Frequenzmodulation, sondern durch die Integrationswirkung der Bandbreiteneingang der Energieinhalt der Störspitzen ausgewertet wird. Auch diese Massnahme führt bei grossen Störungen zu grösseren Detektionszeiten und damit zu einer Begrenzung der Umschalthäufigkeit. Zusätzlich ergibt sich der Vorteil der analogen Auswertbarkeit grosser Frequenzstörhübe, die für die Anhebung der Schaltschwellen benutzt werden können und somit die Möglichkeit weiter besteht, von den am Selektoreingang verfügbaren Signalen das Beste auszuwählen. Besonderes vorteilhaft ist es, die Frequenzbandbreite dieses Filters an die Signalqualität anzupassen dadurch, dass mit kleiner werdender Signalqualität die Filterbandbreite geeignet verkleinert wird.

Es hat sich ergeben dass in Gebieten mit sehr schlechtem Empfangssignal eine zu grosse Umschalthäufigkeit auftritt. Zur Auswahl des besten unter diese Bedingungen verfügbaren Signals wird die in den Frequenzhubspitzen enthaltene Energie durch Integration ausgewertet und das aktuelle Frequenzstörhubsignal überlagert.

In einem weiteren Ausführungsbeispiel wird der Nachteil der naturgemäss auftretenden Retadierung der dynamischen Schwellenmitführung vermieden. Um dies zu bewirken, wird das Signal nach dem FM-Demodulator 32 und dem AM-Demodulator 35 um eine gewisse Laufzeit geeignet verzögert derart, dass z.B. bei Auftreten einer grossen Nutzmodulationshubspitze und anschliessendem Vergleich mit dem momentanen Schwellenpegel V₁ dieser bereits einen der grossen Nutzmodulationshubspitze angepassten Wert besitzt. Die Laufzeit wird dabei so gewählt, dass sie näherungsweise der Laufzeit des Signalwegs zwischen dem FM-Demodulatorausgang 27 und dem Eingang des Schwellenwertdetektors entspricht, wo der Vergleich mit dem Signal stattfindet.

Besonders vorteilhaft ist es, den niederfrequenten Hörkanal während der Umschaltzeiten des Diversityprozessors 1 stumm zu schalten, um Restumschaltstörungen unhörbar zu machen. Die hierfür erforderlichen Schaltsignale auf Leitung 50 (Figur 13) werden durch den Monoflop 26 am Ausgang der Steuerschaltung 9 angeschlossene Leitung 13 vorteilhaft abgeleitet. Die Stummschaltung 33 ist wei "Mute" Schaltung von allgemeiner Bekanntheit. Es können entweder eine Austastung des niederfrequenten Signals auf Leitung 29 (Figur 13) der nicht dargestellten NF-Teil des FM-Empfängers oder, um Schaltgeräusche zu vermeiden, die Momentanspannung dieses NF-Signals für die Zeit der Stummschaltung 33 gehalten werden, um nach dieser Zeit mit dem weiterführenden Signal fortzufahren.

In einer besonders vorteilhaften Ausführungsbeispiel wird das NF-Signal mit dem Mittelwert des Ausgangssignals am Ausgang 48 der N/S Schaltung 42 vorliegenden Signalstörabstandes bewertet. Mit kleiner werdendem Störabstand ist es vorteilhaft, das NF-Signal auf Leitung 29 (Figur 14) mit Hilfe eines Potentiometers 34 entsprechend zu verringern, wodurch Reststörungen physiologisch weniger störend bewertet werden.

## Patentansprüche

1. Antennendiversity-Anlage für den mobilen Empfang frequenzmodulierter Schwingungen mit einem Empfänger (2), mindestens zwei Antennen (1-i; i = 1, 2, ..., n) und einem Diversityprozessor (3) welchem ein Signal zurückgeführt wird welches einer bestimmten der Antennensignalen abgeleiteten lineare Kombination entspricht und welcher Diversity Processor Mittel enthält zum Überprüfen des zurückgeführten Signals und um gegebenenfalls eine andere aus den Antennensignalen abgeleitete lineare Kombination dem Empfänger zuzuführen, dadurch gekennzeichnet, daß die Anlage einen FM-Tuner mit ZF-Teil (2) enthält, daß das dem Diversityprozessor (3) zurückgeführten Signal ein zwischenfrequentes oder hochfrequentes Signal ist, welches einer bestimmten, den Antennensignalen abgeleiteten linearen Kombination entspricht und daß der Diversityprozessor (3) einen AM-Demodulator (35) mit einem daran angeschlossenen Amplitudenschwelledetektor (36), einen FM-Demodulator (32) mit einem daran angeschlossenen Frequenzhubschwellendetektor (31) und Mittel enthält um bei gleichzeitigem Auftreten eines die Amplitudenschwelle des AM-Schwellendetektors (36) überschreitenden Amplitudeneinbruchs und eines die Frequenzhubschwelle des Frequenzhubschwellendetektors (31) überschreitenden störungsbedingten Frequenzhubpulses im zwischenfrequenten oder hochfrequenten Signal eine andere aus den Antennensignalen abgeleitete lineare Kombination den Tuner mit ZF-Teil (2) eingangsseitig zuzuführen.

2. Antennendiversity-Anlage nach Anspruch 1, dadurch gekennzeichnet, dass der Diversityprozessor (3) einen Antennencombiner (10) mit mindestens zwei Antenneneingängen (3-i; i=1, 2, ... n) und einem Hochfrequenzausgang (20) und eine Auswerteschaltung (30) besitzt und das zwischenfrequente oder hochfrequente Signal der Auswerteschaltung (30) zugeführt wird und die Auswerteschaltung (30) den Frequenzhubschwellendetektor (31) und die Amplitudenschwellendetektor (36) enthält um in Abhängigkeit des gleichzeitigen Auftretens eines die Frequenzhubschwelle des Frequenzhubschwellendetektors (31) überschreitenden störungsbedingten Frequenzhubpulses im zwischenfrequenten Signal und eines die Amplitudenschwelle des Amplitudenschwellendetektors (36) überschreitender Amplitudeneinbruch ein Adressignal (12) an den Antennencombiner (10) abzugeben, welcher entsprechend dem Adressignal (12) eine der linearen Kombinationen vom Antennensignalen zum Hochfrequenzausgang (20) durchschaltet.

3. Antennendiversity-Anlage nach Anspruch 2, dadurch gekennzeichnet, dass der Antennencombiner (10) eine Matrix (18) mit n Antenneneingängen (3-1, ..., 3-n) und m Signalausgängen enthält, welche m Linearkombinationen aus den n Antennensignalen bildet und den m Signalausgängen zuführt, und einen Signalselektor (19) mit m auf den Signalausgängen der Matrix (18) angeschlossenen Signaleingängen (19-1, ... 19-m), einen Hochfrequenzausgang (20) und einen Adresseingang (12-1) enthält, und der Signalselektor (19) das Signal desjenigen Signaleingangs (19-1, ... 19-m) zum Hochfrequenzausgang (20) durchschaltet, der einem am Adresseingang (12) anliegenden Adresswort entspricht.

4. Antennendiversity-Anlage nach Anspruch 3, dadurch gekennzeichnet, dass die Matrix (18) eine erste Summenschaltung (38) enthält und jeder Antenneneingang (3-1, ..., 3-n) jeweils über einen Phasendrehglied (22-1-1, ..., 22-1-j; ...; 22-n-1, ..., 22-n-k, wobei j, ..., k beliebige ganzen Zahlen sind, dessen Phase geeignet eingestellt ist, und über ein Amplitudengewichtungsglied (23-1-1, ..., 23-1-j; ...; 23-n-1, ..., 23-n-k, wobei j, ..., k beliebige ganzen Zahlen sind, dessen Gewichtungsfaktor geeignet eingestellt ist, mit den Eingängen (38-1-1; 38-1-j; ...; 38-n-1, ... 38-n-k) der Summenschaltung (38) verbunden ist und jeder Ausgang der Summenschaltung (38) mit einem der m Signaleingänge (19-1, ..., 19-m) des Signalselektors (19) verbunden ist.

5. Antennendiversity-Anlage nach Anspruch 4, dadurch gekennzeichnet, dass die Anzahl n der Antenneneingänge (3-1, ... 3-n) der Matrix (18) und die Zahl m der Signaleingänge (19-1, ... 19-n) des Signalselektors (19) gleich sind und jeder Antenneneingang (3-1, ..., 3-n) über ein Amplitudengewichtungsglied (23) mit jeweils einem der m Signaleingänge (19-1, ... 19-m) des Signalselektors (19) verbunden ist und der Gewichtungsfaktor geeignet eingestellt ist.

6. Antennendiversity-Anlage nach Anspruch 5, dadurch gekennzeichnet, dass die Amplitudengewichtungsglieder (23) so eingestellt sind, dass die zeitlichen Mittelwerte der Signalstörabstände sämtlicher Selektoreingangssignale (19-1, ..., 19-m) möglichst gleich sind.

7. Antennendiversity-Anlage nach Anspruch 4, dadurch gekennzeichnet, dass der Antennencombiner (10) zwei Antenneneingänge (3-1 und 3-2) und eine zweite Summier- (22-1) und erste Differenzschaltung (21-2) enthält, wobei die Antenneneingänge (3-1, 3-2) einerseits beiden auf der Summierschaltung (21-1) und der Differenzschaltung (21-2) angeschlossen sind und die Summier- und Differenzschaltung mit einem Signaleingang (19-2, 19-3) des Signalselektors (19) verbunden ist und andererseits jeder Antenneneingang direkt mit einem weiteren Signaleingang (19-1, 19-4) des Signalselektors (19) verbunden ist.

8. Antennendiversity-Anlage nach Anspruch 3, dadurch gekennzeichnet, dass die Auswerteschaltung (30) einen Verzerrungsdetektor (8) und eine Steuerschaltung (9) enthält und der Verzerrungsdetektor (8) an den Tuner mit ZF-Teil (2) angeschlossen ein binäres Logiksignal (11) an die Steuerschaltung (9) abgegeben wird in Abhängigkeit vom Auftreten eines die Frequenzhubschwelle des Frequenzhubschwellendetektors (31) überschreitenden störungsbedingten Frequenzhubpulses im zwischenfrequenten Signal (4) oder zusätzlich, eine die Amplitudenschwelle des Amplitudenschwellendetektors (36) überschreitender Amplitudeneinbruch und der Verzerrungsdetektor (8) in Antwort auf das binäre Logiksignal (11) ein geeignetes Adressignal (12) an den Adresseingang (12-1) des Signalselektors (19) abgibt.

9. Antennendiversity-Anlage nach Anspruch 8, dadurch gekennzeichnet, dass die Steuerschaltung (9) die Signaleingänge (19-1, ... 19-m) des Signalselektors (19) nach einer Prioritätenliste mit dem FM-Tuner mit ZF-Teil (2) verbindet.

10. Antennendiversity-Anlage nach Anspruch 1, dadurch gekennzeichnet, dass der Diversityprozessor (3) einen zwischen dem FM-Demodulator (31) und einer Eingangsklemme (V₁) des Frequenzhubschwellendetektors (31) angeschlossenen Frequenzhubschwellenregeleinrichtung (40) enthält zum dynamisch Regeln der Frequenzhubschwelle V₁ oder zusätzlich einen zwischen dem AM-Demodulator (35) und einer Eingangsklemme (V₂) des Amplitudenschwellendetektors (36) angeschlossenen Amplitudenschwellenregeleinrichtung (41) enthält zum dynamisch Regeln der Amplitudenschwelle V₂ des Amplitudenschwellendetektors (36).

11. Antennendiversity-Anlage nach Anspruch 10, dadurch gekennzeichnet, dass die Frequenzhubschwellenregeleinrichtung (40) ein auf eine dritte Summierschaltung (44) angeschlossenes Hochpassfilter mit nachgeschaltetem Gleichrichter und Integrator N/S-Schaltung (42) und ein auf die dritte Summierschaltung (44) angeschlossenes Tiefpassfilter mit nachgeschaltetem ersten Gleichrichter und erstem Integrator (Frequenznutzhubmess 43) enthält und die Amplitudenschwellenregeleinrichtung (41) einen auf eine zweite Differenzschaltung (47) angeschlossenen Modulationsgradmesser (46) und einen auf die zweite Differenzschaltung (47) angeschlossenen zweiten Gleichrichter mit nachgeschaltetem zweitem Integrator (46) enthält.

12. Antennendiversity-Anlage nach Anspruch 8, dadurch gekennzeichnet, dass die Auswerteschaltung (30) einen Wechselhäufigkeitsdetektor (9, 16) enthält um in Abhängigkeit der detektierten Häufigkeit der Signalwechsel der an den Tuner mit ZF-Teil (2) zugeführten Antennensignalkombinationen um die Häufigkeit der Signalwechsel zu regeln.

13. Antennendiversity-Anlage nach Anspruch 12, dadurch gekennzeichnet, dass der Wechselhäufigkeitsdetektor (9, 16) einen in der Steuerschaltung (9) angebrachtgen Impulsgenerator enthält um in Abhängigkeit des an die Steuerschaltung (9) zugeführten binären Logiksignals Impulse zu generieren und einen zwischen der Steuerschaltung (9) und dem Verzerrungsdetektor (8) angeschlossenen dritten Gleichrichter mit nachgeschaltetem drittem Integrator enthält zum Regeln der Frequenzhubschwelle V₁ oder zusätzlich der Amplitudeschwelle V₂.

14. Antennendiversity-Anlage nach Anspruch 13, dadurch gekennzeichnet, dass der dritte Integrator auf die dritte Summierschaltung (44) oder zusätzlich auf die zweite Differenzschaltung (47) angeschlossen ist.

## Claims

1. Antenna diversity system for the mobile reception of frequency-modulated signals, comprising a receiver (2), at least two antennas (1-i; i=1,2,...,n) and a diversity processor (3) to which a signal is fed back that corresponds to a specific linear combination derived from the antenna signals and which includes Diversity Processor Means for testing the signals that have been fed back and for applying, as required, a different linear combination derived from the antenna signals to the receiver, characterized in that the system comprises an FM tuner with intermediate frequency (IF) part (2), in that an intermediate frequency or high-frequency signal is fed back to the diversity processor (3) which signal corresponds to a given linear combination derived from the antenna signals, and in that the diversity processor (3) comprises an AM demodulator (35) with a succeeding amplitude threshold detector (36) and an FM demodulator (32) with a succeeding frequency sweep threshold detector (31) and means by which, at the simultaneous occurrence of an amplitude burst exceeding the amplitude threshold of the AM threshold detector (36) and of an interference dependent frequency sweep pulse and exceeding the frequency sweep threshold of the frequency sweep threshold detector (31) in the intermediate frequency or high-frequency signal, a different linear combination derived from the antenna signals is applied to the input side of the tuner with IF part (2).

2. Antenna diversity system as claimed in Claim 1, characterized in that the diversity processor (3) comprises an antenna combiner (10) having at least two antenna inputs (3-i;i=1,2,...,n) and a high-frequency output (20) and an evaluation circuit (30) and the intermediate frequency or high-frequency signal is supplied to the evaluation circuit (30), and in that the evaluation circuit (30) comprises the frequency sweep threshold detector (31) and the amplitude threshold detector (36) to supply, in dependence on the simultaneous occurrence of an interference-dependent frequency sweep pulse exceeding the frequency sweep threshold of the frequency sweep threshold detector (31) in the intermediate frequency signal and of an amplitude burst exceeding the amplitude threshold of the amplitude threshold detector (36), an address signal (12) to the antenna combiner (10), which passes one of the linear combinations of antenna signals on to the high-frequency output (20) in accordance with the address signal (12).

3. Antenna diversity system as claimed in Claim 2, characterized in that the antenna combiner (10) comprises a matrix circuit (18) having n antenna inputs (3-1,..., 3-n) and m signal outputs, which forms m linear combinations from the n antenna signals and supplies them to the m signal outputs, as well as a signal selector (19) having m signal inputs (19-1, ..., 19-m) connected to the signal outputs of the matrix circuit (18), a high-frequency output (20) and an address input (12-1), and in that the signal selector (19) passes the signal of that signal input (19-1,...19-m) on to the high-frequency output (20) which corresponds to an address word present at the address input (12).

4. Antenna diversity system as claimed in Claim 3, characterized in that the matrix circuit (18) comprises a first summing circuit (38) and the antenna inputs (3-1, ..., 3-n) are connected each through a phase shifter (22-1-1, ..., 22-1-j; ...; 22-n-1, ..., 22-n-k, where j...,k are arbitrary integers), whose phase is suitably adjusted, and each through an amplitude weighting device (23-1-1, ..., 23-1-j; ...; 23-n-1,... 23-n-k, where j,...,k are arbitrary integers), whose weighting factor is suitably adjusted, to the inputs (38-1-1; 38-1-j; ...; 38-n-1, ..., 38-n-k) of the summing circuit (38) and each output of the summing circuit (38) is connected to one of the m signal inputs (19-1, ..., 19-m) of the signal selector (19).

5. Antenna diversity system as claimed in Claim 4, characterized in that the number n of antenna inputs (3-1, ..., 3-n) of the matrix circuit (18) and the number m of signal inputs (19-1, ..., 19-n) of the signal selector (19) are equal and each antenna input (3-1, ..., 3-n) is connected through an amplitude weighting device (23) each time to one of the m signal inputs (19-1, ..., 19-m) of the signal selector (19) and the weighting factor is suitably adjusted.

6. Antenna diversity system as claimed in Claim 5, characterized in that the amplitude weighting devices (23) are adjusted so that the time-averaged values of the signal-to-noise ratios of all selector input signals (19-1, ..., 19-m) are substantially equal.

7. Antenna diversity system as claimed in Claim 4, characterized in that the antenna combiner (10) has two antenna inputs (3-1 and 3-2) and a second summing circuit (21-1) and a first subtraction circuit (21-2), the antenna inputs (3-1, 3-2) being connected, on the one hand, both to the summing circuit (21-1) and to the subtraction circuit (21-2) and the summing and subtraction circuits being connected to a signal input (19-2, 19-3) of the signal selector (19) and, on the other hand, each antenna input being directly connected to a further signal input (19-1, 19-4) of the signal selector (19).

8. Antenna diversity system as claimed in Claim 3, characterized in that the evaluation circuit (30) comprises a distortion detector (8) and a control circuit (9) and the distortion detector (8) is connected to the tuner with IF part (2), whilst a binary logic signal (11) is supplied to the control circuit (9) in dependence on the occurrence of an interference-dependent frequency sweep pulse exceeding the frequency sweep threshold of the frequency sweep threshold detector (31) in the intermediate frequency signal (4), or, additionally, on an amplitude burst exceeding the amplitude threshold of the amplitude threshold detector (36), and the distortion detector (8) supplies a suitable address signal (12) to the address input (12-1) of the signal selector (19) in response to the binary logic signal (11).

9. Antenna diversity system as claimed in Claim 8, characterized in that the control circuit (9) connects the signal inputs (19-1, ..., 19-m) of the signal selector (19) to the FM tuner with IF part (2) according to a priority list.

10. Antenna diversity system as claimed in Claim 1, characterized in that the diversity processor (3) comprises a frequency sweep threshold control device (40) connected between the FM demodulator (31) and an input terminal (V₁) of the frequency sweep threshold detector (31) for dynamically controlling the frequency sweep threshold V₁ or, additionally, an amplitude threshold control device (41) connected between the AM demodulator (35) and an input terminal (V₂) of the amplitude threshold detector (36) for dynamically controlling the amplitude threshold V₂ of the amplitude threshold detector (36).

11. Antenna diversity system as claimed in Claim 10, characterized in that the frequency sweep threshold control device (40) comprises a high-pass filter with a succeeding rectifier and integrator (S/N circuit (42)) connected to a third summing circuit (44) and a low-pass filter with a succeeding first rectifier and first integrator (device 43 for measuring the effective frequency sweep) connected to the third summing circuit (44), and in that the amplitude threshold control device (41) comprises a device (46) for measuring the degree of modulation connected to a second subtraction circuit (47) and a second rectifier with a succeeding second integrator (46) connected to the second subtraction circuit (47).

12. Antenna diversity system as claimed in Claim 8, characterized in that the evaluation circuit (30) comprises a change-over frequency detector (9, 16) for controlling the frequency of the signal change-overs in dependence on the detected frequency of the signal change-overs of the antenna signal combinations supplied to the tuner with IF part (2).

13. Antenna diversity system as claimed in Claim 12, characterized in that the change-over frequency detector (9, 16) comprises a pulse generator included in the control circuit (9) for generating pulses in dependence on the binary logic signal supplied to the control circuit (9), and a third rectifier with a succeeding third integrator connected between the control circuit (9) and the distortion detector (8) for controlling the frequency sweep threshold V₁ or additionally the amplitude threshold V₂.

14. Antenna diversity system as claimed in Claim 13, characterized in that the third integrator is connected to the third summing circuit (44) or, additionally, to the second subtraction circuit (47).

## Revendications

1. Dispositif à diversité d'antenne pour la réception mobile d'oscillations modulée en fréquence comprenant un récepteur (2), au moins deux antennes 1-i(i=1,2, ... n) et un processeur de diversité (3) auquel est appliqué en retour un signal qui correspond à une certaine combinaison linéaire dérivée des signaux d'antenne, ce processeur de diversité contenant des moyens pour vérifier le signal obtenu en retour et pour éventuellement appliquer au récepteur une autre combinaison linéaire dérivée des signaux d'antenne, caractérisé en ce que le dispositif comprend un tuner FM à section FI (2), que le processeur de diversité (3) reçoit en retour un signal à fréquence intermédiaire ou à haute fréquence qui correspond à une certaine combinaison linéaire dérivée des signaux d'antenne et que le processeur de diversité (3) comprend un démodulateur AM (35) auquel est connecté un détecteur de seuil d'amplitude (36), un démodulateur FM (32) auquel est connecté un détecteur de seuil de déviation de fréquence (31) et des moyens pour, lors d'une apparition simultanée, dans le signal à fréquence intermédiaire ou à haute fréquence, d'une variation brusque d'amplitude excédant le seuil d'amplitude du détecteur de seuil AM et d'une impulsion de déviation de fréquence due à une perturbation excédant le seuil de déviation de fréquence du détecteur de seuil de déviation de fréquence (31), appliquer du côté de l'entrée au tuner FM à section FI (2) une autre combinaison linéaire dérivée des signaux d'antenne.

2. Dispositif à diversité d'antenne suivant la revendication 1, caractérisé en ce que le processeur de diversité (3) comprend un combineur d'antennes (10) comportant au moins deux entrées d'antenne (3-i; i= 1,2, ... n) et une sortie de haute fréquence (20) ainsi qu'un circuit d'évaluation (30), le signal à fréquence intermédiaire ou à haute fréquence étant appliqué au circuit d'évaluation (30) et le circuit d'évaluation (30) contenant le détecteur de seuil de déviation de fréquence (31) et le détecteur de seuil d'amplitude (36) pour, en fonction de l'apparition simultanée d'une impulsion de déviation de fréquence, due à une perturbation, excédant le seuil de déviation de fréquence du détecteur de seuil de déviation de fréquence (31) dans le signal à fréquence intermédiaire et d'une variation brusque d'amplitude excédant le seuil d'amplitude du détecteur de seuil d'amplitude (36), fournir un signal d'adresse (12) au combineur d'antennes (10) qui, en fonction du signal d'adresse (12), transmet l'une des combinaisons linéaires de signaux d'antenne à la sortie de haute fréquence (20).

3. Dispositif à diversité d'antenne suivant la revendication 2, caractérisé en ce que le combineur d'antennes (10) contient une matrice (18) à n entrées d'antennes (3-1, ..., 3-n) et m sorties de signaux, qui forme m combinaisons linéaires à partir des n signaux d'antenne et les applique aux m sorties de signaux ainsi qu'un sélecteur de signaux (19) à m entrées de signaux (19-1, ..., 19-m) connectées aux sorties de signaux de la matrice (18), une sortie haute fréquence (20) et une entrée d'adresse (12-1), le sélecteur de signaux (19) transmettant à la sortie à haute fréquence (20) le signal de l'entrée de signal (19-1, ..., 19-m) qui correspond à un mot d'adresse présent à l'entrée d'adresse (12).

4. Dispositif à diversité d'antenne suivant la revendication 3, caractérisé en ce que la matrice (18) contient un premier circuit sommateur (38) et chaque entrée d'antenne (3-1, ..., 3-n) est connectée chaque fois par l'intermédiaire d'un élément de rotation de phase (22-1-1, ..., 22-1-j; ...; 22-n-1, ..., 22-n-k où j, ..., k sont des nombres entiers quelconques) dont la phase est réglée de manière appropriée, et par l'intermédiaire d'un élément de pondération d'amplitude (23-1-1, ..., 23-1-j; ...; 23-n-1, ..., 23-n-k, où j, ..., k sont des nombres entiers quelconques) dont le facteur de pondération est réglé de manière appropriée, aux entrées (38-1-1; 38-1-j; ...; 38-n-1, ... 38-n-k) du circuit sommateur (38), et chaque sortie du circuit sommateur (38) est connectée à l'une des entrées de signaux (19-1, ..., 19-m) du sélecteur de signaux (19).

5. Dispositif à diversité d'antenne suivant la revendication 4, caractérisé en ce que le nombre n des entrées d'antenne (3-1, ... 3-n) de la matrice (18) et le nombre m des entrées de signaux (19-1, ... 19-m) du sélecteur de signaux (19) sont identiques et chaque entrée d'antenne (3-1, ..., 3-n) est connectée par l'intermédiaire d'un élément de pondération d'amplitude (23) à chaque fois une des m entrées de signaux (19-1, ... 19-m) du sélecteur de signaux (19) et le facteur de pondération est réglé de manière appropriée.

6. Dispositif à diversité d'antenne suivant la revendication 5, caractérisé en ce que les éléments de pondération d'amplitude (23) sont réglés de manière telle que les valeurs moyennes temporelles des rapports signal/bruit de l'ensemble des signaux d'entrée de sélecteur (19-1, ..., 19-m) soient aussi semblables que possible.

7. Dispositif à diversité d'antenne suivant la revendication 4, caractérisé en ce que le combineur d'antennes (10) comporte deux entrées d'antenne (3-1 et 3-2) ainsi qu'un second circuit sommateur (22-1) et un premier circuit soustracteur (21-2), les entrées d'antenne (3-1, 3-2) étant d'une part connectées toutes deux au circuit sommateur (21-1) et au circuit soustracteur (21-2), le circuit sommateur et le circuit soustracteur étant connectés à une entrée de signaux (19-2, 19-3) du sélecteur de signaux (19) et étant d'autre part chacun connectés directement à une autre entrée de signaux (19-1, 19-4) du sélecteur de signaux (19).

8. Dispositif à diversité d'antenne suivant la revendication 3, caractérisé en ce que le circuit d'évaluation (30) comprend un détecteur de distorsion (8) et un circuit de commande (9) et le détecteur de distorsion (8) connecté au tuner FM à section FI (2) fournit un signal logique binaire (11) au circuit de commande (9) en fonction de l'apparition d'une impulsion de déviation de fréquence due à une perturbation excédant le seuil de déviation de fréquence du détecteur de seuil de déviation de fréquence (31) dans le signal de fréquence intermédiaire (4) ou, en outre, d'une variation brusque d'amplitude excédant le seuil d'amplitude du détecteur de seuil d'amplitude (36) et le détecteur de distorsion (8) fournissant, en réponse au signal logique binaire (11), un signal d'adresse (12) approprié à l'entrée d'adresse (12-1) du sélecteur de signaux (19).

9. Dispositif à diversité d'antenne suivant la revendication 8, caractérisé en ce que le circuit de commande (9) connecte les entrées de signaux (19-1, ... 19-m) du sélecteur de signaux (19) selon une liste de priorités au tuner FM à section FI (2).

10. Dispositif à diversité d'antenne suivant la revendication 1, caractérisé en ce que le processeur de diversité (3) comprend un dispositif de réglage de seuil de déviation de fréquence (40) connecté entre le démodulateur FM (31) et une borne d'entrée (V₁) du détecteur de seuil de déviation de fréquence (31) pour la régulation dynamique du seuil de déviation de fréquence V₁ ou comprend, en outre, un dispositif de réglage de seuil d'amplitude connecté entre le démodulateur AM (35) et une borne d'entrée (V₂) du détecteur de seuil d'amplitude (36) pour la régulation dynamique du seuil d'amplitude (V₂) du détecteur de seuil d'amplitude (36).

11. Dispositif à diversité d'antenne suivant la revendication 10, caractérisé en ce que le dispositif de réglage de seuil de déviation de fréquence (40) comprend un filtre passe-haut connecté au troisième circuit sommateur (44) et suivi d'un circuit redresseur et intégrateur N/S (42) ainsi qu'un filtre passe-bas connecté au troisième circuit sommateur (44) et suivi d'un premier redresseur et d'un premier réintégrateur (mesure de déviation utile de fréquence 43) et que le dispositif de réglage de seuil d'amplitude (41) comprend un dispositif de mesure de taux de modulation (46) connecté au deuxième circuit soustracteur (47) et un deuxième redresseur suivi d'un deuxième intégrateur (46) connecté au deuxième circuit soustracteur (47).

12. Dispositif à diversité d'antenne suivant la revendication 8, caractérisé en ce que le circuit d'évaluation (30) contient un détecteur de fréquence d'alternance (9, 16) pour régler, en fonction de la fréquence détectée de l'alternance de signaux des combinaisons de signaux d'antenne appliquées au tuner FM à section FI (2) pour régler la fréquence de l'alternance de signaux.

13. Dispositif à diversité d'antenne suivant la revendication 12, caractérisé en ce que le détecteur de fréquence d'alternance (9, 16) contient un générateur d'impulsions monté dans le circuit de commande (9) pour générer des impulsions en fonction du signal logique binaire appliqué au circuit de commande (9) ainsi qu'un troisième redresseur suivi d'un troisième intégrateur connecté entre le circuit de commande (9) et le détecteur de distorsion (8) pour régler le seuil de déviation de fréquence (V₁) ou en plus le seuil d'amplitude (V₂).

14. Dispositif à diversité d'antenne suivant la revendication 13, caractérisé en ce que le troisième intégrateur est connecté au troisième circuit sommateur (44) ou, en outre, au deuxième circuit soustracteur (47).
